# EUROPEAN PATENT APPLICATION

(11) **EP 4 145 587 A1**
(43) Date of publication of application: **08.03.2023**
(21) Application number: 21797320.5
(22) Date of filing: 06.04.2021
(51) Int. Cl.: H01M 10/44, H01M 10/48, H02J 7/00, H02J 7/02

(54) **ELECTRICITY STORAGE SYSTEM, AND CONTROL METHOD**

(30) Priority: 27.04.2020 JP 2020078203
(71) Applicant: Kyocera Corporation, Kyoto-shi Kyoto 612-8501 (JP)
(72) Inventor: NAKAYAMA Shusuke, Kyoto-shi, Kyoto 612-8501 (JP)
(74) Representative: TBK
(86) International application number: PCT/JP2021/014632
(87) International publication number: WO 2021/220733

(57) **Abstract**

A power storage system, in which two or more power storage devices are connected in parallel to one power conversion device by wiring, includes a detection unit that detects a voltage of the two or more power storage devices, and a control unit that executes current decrease control for decreasing a predetermined discharge current input to the power conversion device or a predetermined charge current output from the power conversion device to reduce a difference in voltage between the two or more power storage devices when the voltage detected by the detection unit reaches a predetermined voltage.

## Description

### Technical Field

The present disclosure relates to a power storage system and a control method.

### Background Art

A power storage system including two or more power storage devices connected in parallel with respect to one power conversion device (power conditioning system; PCS) is known. In such a power storage system, a technique for controlling switches provided between each of the power storage devices and a load to reduce a difference in voltage between the two or more power storage devices has been proposed (for example, Patent Literature 1).

However, a case is conceivable in which the length of a wire between the power conversion device and each of the power storage devices differs for each power storage device. In other words, the impedance of the wire is different for each power storage device. In such a case, the entire power storage system cannot execute a discharging or charging operation properly because of the difference in voltage between a power storage device having a relatively short wire and a power storage device having a relatively long wire.

### Citation List

### Patent Literature

Patent Literature 1: WO 2013/121849 Pamphlet

### Summary of Invention

A first aspect of the present disclosure is a power storage system, in which two or more power storage devices are connected in parallel with one power conversion device by wiring, and the power storage system includes a detection unit that detects a voltage of each of the two or more power storage devices, and a control unit that executes current decrease control for decreasing a predetermined discharge current input to the power conversion device or a predetermined charge current output from the power conversion device to reduce a difference in voltage between the two or more power storage devices when the detected voltage detected by the detection unit reaches a predetermined voltage.

A second aspect of the present disclosure is a control method used in a power storage system in which two or more power storage devices are connected in parallel to one power conversion device by wiring, and the method includes step A of detecting a voltage of each of the two or more power storage devices, and step B of, when the voltage detected in step A reaches a predetermined voltage, executing current decrease control for decreasing a predetermined discharge current input to the power conversion device or a predetermined charge current output from the power conversion device to reduce a difference in voltage between the two or more power storage devices.

### Brief Description of Drawings

FIG. 1 illustrates a power storage system 100 according to an embodiment.
FIG. 2 illustrates a controller 130 according to the embodiment.
FIG. 3 explains a discharging operation according to the embodiment.
FIG. 4 illustrates a control method according to the embodiment.
FIG. 5 illustrates a control method according to the embodiment.
FIG. 6 explains a discharging operation according to Modification Example 1.
FIG. 7 illustrates a control method according to Modification Example 1.
FIG. 8 illustrates the control method according to Modification Example 1.
FIG. 9 explains a discharging operation according to Modification Example 2.
FIG. 10 illustrates a control method according to Modification Example 2.
FIG. 11 illustrates the control method according to Modification Example 2.
FIG. 12 illustrates a power storage system 100 according to Modification Example 3.

### Description of Embodiments

An embodiment will be described below with reference to the accompanying drawings. Note that in the following description of the drawings, the same or similar components will be denoted by the same or similar reference signs. However, the drawings are schematic.

### Embodiment

### Power Storage System

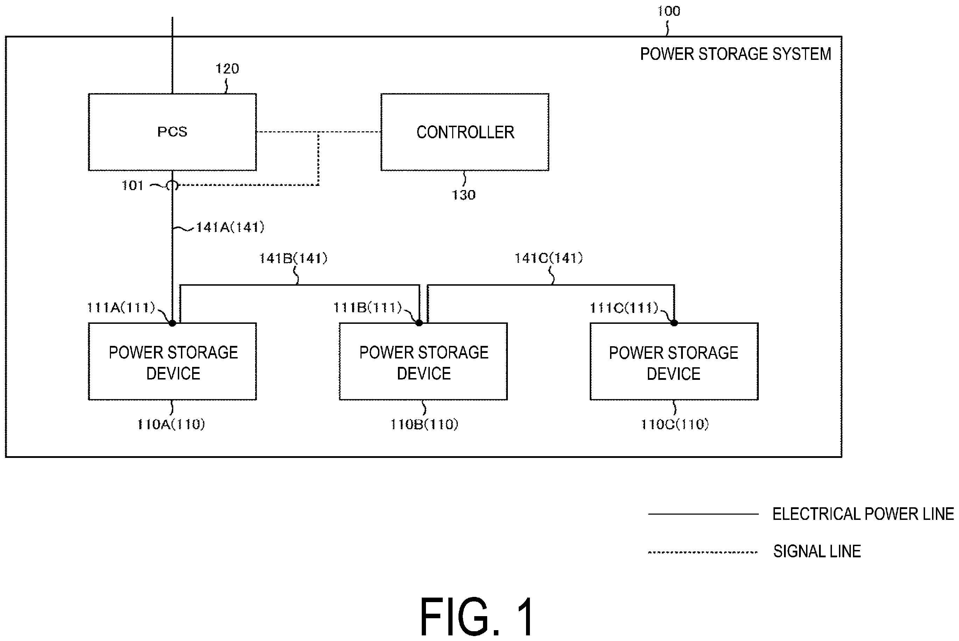

A power storage system according to an embodiment will be described below. As illustrated in FIG. 1, a power storage system 100 includes two or more power storage devices 110, a power conditioning system (PCS) 120, and a controller 130. The two or more power storage devices 110 are connected in parallel with respect to the PCS 120 by wires 141.

FIG. 1 illustrates power storage devices 110A, 110B, and 110C as the power storage device 110. The power storage device 110A and the PCS 120 are connected by a wire 141A, the power storage device 110A and the power storage device 110B are connected by a wire 141B, and the power storage device 110B and the power storage device 110C are connected by a wire 141C. In FIG. 1, the wire 141 of either a positive or negative electrode is illustrated for simplicity of explanation. Note that, thus, that the power storage devices 110A, 110B, and 110C are connected in parallel, not in series.

As illustrated in FIG. 1, the length of the wire 141 connecting each power storage device 110 and the PCS 120 is different for each power storage device 110. Specifically, the wire 141 connecting the power storage device 110C and the PCS 120 is longer than the wire 141 connecting the power storage device 110B and the PCS 120, and the wire 141 connecting the power storage device 110B and the PCS 120 is longer than the wire 141 connecting the power storage device 110A and the PCS 120.

The power storage device 110 is a device for storing electrical power. Specifically, the power storage device 110 includes two or more power storage cells that accumulate electrical power. The two or more power storage cells may be connected in series to each other to form a cell string. The power storage device 110 may include two or more cell strings connected in parallel to each other. The power storage device 110 includes a discharge resistance connected to each of the two or more power storage cells, and may have a function (hereinafter, a cell balance function) that reduces variations in the voltage values of the two or more power storage cells by discharging power from the power storage cell to the discharge resistance. The voltage values of the power storage cells may be equalized by repeating charging or discharging in the power storage device 110.

In FIG. 1, each power storage device 110 has an interface terminal 111 that inputs power to or outputs power from the power storage device 110. For example, the power storage device 110A has an interface terminal 111A, the power storage device 110B has an interface terminal 111B, and the power storage device 110C has an interface terminal 111C.

The PCS 120 is an example of the power conversion device. The PCS 120 converts the DC power output from the power storage device 110 into AC power. The PCS 120 converts the AC power input to the power storage device 110 to DC power. The PCS 120 includes, for example, a DC/DC converter and an inverter.

The controller 130 controls the PCS 120. The controller 130 is connected to the PCS 120 wirelessly or by wire. The controller 130 is connected to a sensor 101 wirelessly or by wire. The sensor 101 is a sensor that detects a voltage of the power storage device 110A having the shortest wire 141. The sensor 101 may be provided on the wire 141A, or may be provided in the power storage device 110A. The wireless system may conform to the standards such as IEEE 802. 11a/b/g/n, ZigBee, Wi-SUN, or LTE. The wired system may conform to the standards such as IEEE 802.3.

### Controller

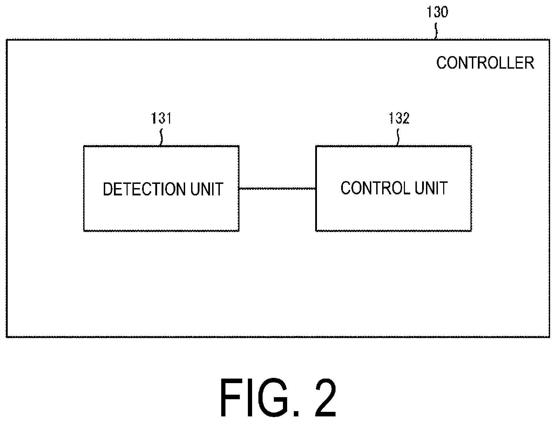

The controller according to the embodiment will be described below. As illustrated in FIG. 2, the controller 130 includes a detection unit 131 and a control unit 132.

The detection unit 131 constitutes a detection unit that detects voltages of the two or more power storage devices 110. In the embodiment, the detection unit 131 detects a voltage of the power storage device 110A having the shortest wire 141, of the two or more power storage devices 110. Specifically, the detection unit 131 detects the voltage of the power storage device 110A according to a signal received from the sensor 101. The sensor 101 may constitute a detection unit that detects voltages of the two or more power storage devices 110, or the sensor 101 and the detection unit 131 may constitute the detection unit.

The control unit 132 may include at least one processor. The at least one processor may include a single integrated circuit (IC) or include a plurality of circuits (such as integrated circuits and/or discrete circuits) communicably connected.

The control unit 132 controls the PCS 120 to control charging and discharging operations of the power storage device 110. In the embodiment, the control unit 132 executes current decrease control for decreasing a predetermined discharge current input to the PCS 120 or a predetermined charge current output from the PCS 120 to reduce a difference in voltage between the two or more power storage devices 110 when the voltage detected by the detection unit 131 reaches a predetermined voltage.

For example, the predetermined voltage may include a lower limit voltage used in the discharging operation of the two or more power storage devices 110. The lower limit voltage may be referred to as a threshold T1. In the discharging operation of the two or more power storage devices 110, the control unit 132 may execute the current decrease control for decreasing the predetermined discharge current when the voltage detected by the detection unit 131 reaches the lower limit voltage. In other words, the control unit 132 may execute the current decrease control for decreasing the predetermined discharge current when the voltage that decreases according to the discharging operation reaches the lower limit voltage.

In the embodiment, the current decrease control may include controlling the predetermined discharge current to zero, that is, stopping the discharging operation of the two or more power storage devices 110.

The control unit 132 may resume the discharging operation with a current smaller than the current before the discharging operation is stopped, after a certain period of time has elapsed from the stop of the discharging operation of the two or more power storage devices 110. Here, the current smaller than the current before the discharging operation is stopped may be a current with a longer OFF time than that before the discharging operation is stopped, as a pulsating current generated by switching control where the ON/OFF switching speed is sufficiently fast (for example, at several tens of kHz or faster). Without switching control, the current smaller than the current before the discharging operation is stopped may be a current with a smaller time average current than that of the current before the discharging operation is stopped.

The predetermined voltage may include an upper limit voltage used in the charging operation of the two or more power storage devices 110. The upper limit voltage may be referred to as a threshold T2. In the charging operation of the two or more power storage devices 110, the control unit 132 may execute the current decrease control for decreasing the predetermined charge current when the voltage detected by the detection unit 131 reaches the upper limit voltage. In other words, the control unit 132 may execute the current decrease control for decreasing the predetermined charge current when the voltage that increases according to the charging operation reaches the upper limit voltage.

In the embodiment, the current decrease control may include controlling the predetermined charge current to zero, that is, stopping the charging operation of the two or more power storage devices 110.

The control unit 132 may resume the charging operation with a current smaller than the current before the charging operation is stopped, after a certain period of time has elapsed from the stop of the charging operation of the two or more power storage devices 110. Here, the current smaller than the current before the charging operation is stopped may be a current with a longer OFF time than that before the charging operation is stopped, as a pulsating current generated by switching control where the ON/OFF switching speed is sufficiently fast (for example, at several tens of kHz or faster). Without switching control, the current smaller than the current before stopping the charging operation may be a current with a smaller time average current than that of the current before the charging operation is stopped.

### Current Decrease Control

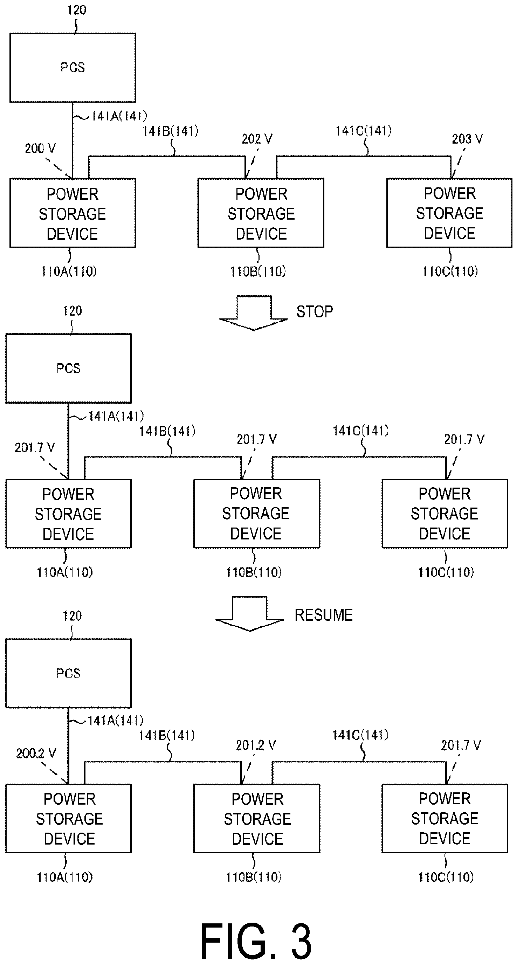

The current decrease control according to the embodiment will be described below. Here, the current decrease control in the discharging operation is illustrated. In FIG. 3, the lower limit voltage is 200 V.

As illustrated in the upper part of FIG. 3, the controller 130 controls the discharging operation of the two or more power storage devices 110. Here, the controller 130 controls the discharging operation such that the predetermined discharge current input to the PCS 120 is a first discharge current (for example, 30A).

Here, a case where the output voltage of the power storage device 110A reaches a lower limit voltage is described. In such a case, the output voltage of the power storage device 110B is dropped due to the impedance of the wire 141B, so, even when the output voltage of the power storage device 110A reaches the lower limit voltage, the output voltage of the power storage device 110B is higher (for example, 202 V) than the output voltage of the power storage device 110A. The output voltage of the power storage device 110C is dropped due to the impedance of the wires 141B and 141C, so, even when the output voltage of the power storage device 110A reaches the lower limit voltage, the output voltage of the power storage device 110C is higher (for example, 203 V) than the output voltage of the power storage devices 110A and 110B.

As illustrated in the middle part of FIG. 3, the controller 130 stops the discharging operation of the two or more power storage devices 110. The controller 130 continues the state in which the discharging operation is stopped for a certain period of time. The control to continuously sop the discharging operation may be referred to as standby control.

Since the two or more power storage devices 110 are connected by the wires 141, the voltages of the two or more power storage devices 110 are equalized by the standby control (for example, 201.7 V).

As illustrated in the lower part of FIG. 3, the controller 130 resumes the discharging operation of the two or more power storage devices 110. Here, the controller 130 controls the discharging operation such that the predetermined discharge current input to the PCS 120 is a second discharge current (for example, 15 A) smaller than the first discharge current (for example, 30A).

For example, when the voltage of the power storage device 110A reaches 200.2 V, the voltage of the power storage device 110B is 201.2 V, and the voltage of the power storage device 110C is 201.7 V. Thus, in the case illustrated in the lower part of FIG. 3, the difference in voltage of the two or more power storage devices 110 is reduced compared to the case illustrated in the upper part of FIG. 3.

According to the current decrease control described above, the difference in voltage between the two or more power storage devices 110 can be reduced by decreasing the predetermined discharge current when the output voltage of the power storage device 110A reaches the lower limit voltage. Furthermore, the entire two or more power storage devices 110 can perform the efficient discharging operation.

FIG. 3 illustrates the case where the predetermined discharge current is decreased from the first discharge current to the second discharge current, but the embodiment is not limited thereto. After the predetermined discharge current is decreased from the first discharge current to the second discharge current, the predetermined discharge current may be controlled to be decreased from the second discharge current to a third discharge current smaller than the second discharge current. In other words, the predetermined discharge current may be controlled so as to be decreased through two or more steps.

### Control Method

The control method according to the embodiment will be described below.

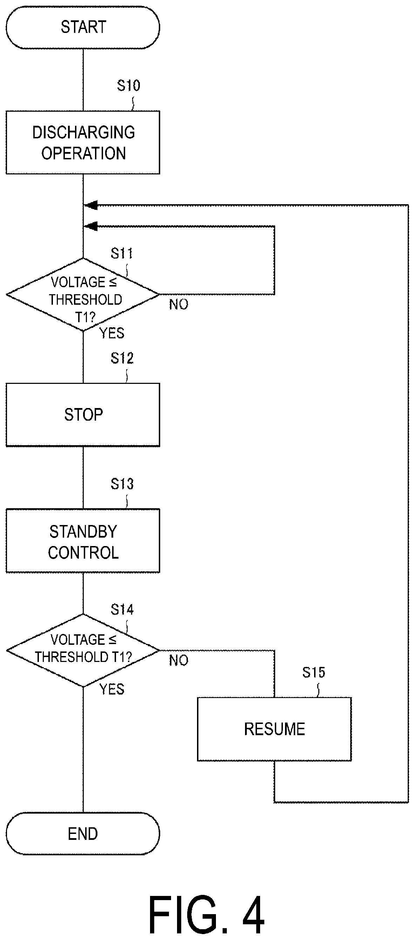

First, the discharging operation is described with reference to FIG. 4.

As illustrated in FIG. 4, in step S10, the controller 130 controls the discharging operation of the two or more power storage devices 110.

In step S11, the controller 130 determines whether the voltage detected by the detection unit 131 is equal to or smaller than the lower limit voltage (threshold T1), that is, whether the voltage detected by the detection unit 131 reaches the threshold T1. While the voltage does not reach the threshold T1, the controller 130 executes the discharging operation. When the voltage reaches the threshold T1, the controller 130 executes the operation of step S12.

In step S12, the controller 130 stops the discharging operation of the two or more power storage devices 110.

In step S13, the controller 130 continues the state in which the discharging operation is stopped for a certain period of time (standby control).

In step S14, the controller 130 determines whether the voltage detected by the detection unit 131 is equal to or smaller than the lower limit voltage (threshold T1), that is, whether the voltage detected by the detection unit 131 exceeds the threshold T1 after the standby control over the certain period of time. When the voltage is equal to or smaller than the threshold T1, the controller 130 ends the processing sequence. When the voltage exceeds the threshold T1, the controller 130 executes the processing of step S15.

In the example illustrated in FIG. 4, it is assumed that the threshold used in the determination in step S14 is the same as the threshold T1 used in the determination in step S11, but the embodiment is not limited thereto. The threshold used in the determination in step S14 may be greater than the threshold T1 used in the determination in step S11.

In step S15, the controller 130 resumes the discharging operation of the two or more power storage devices 110. The controller 130 may resume the discharging operation with a current smaller than the current before the discharging operation is stopped.

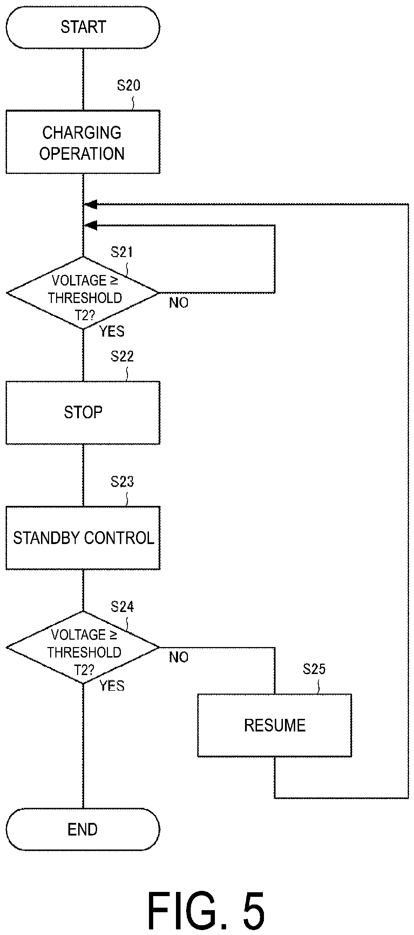

Secondly, the charging operation is described with reference to FIG. 5.

As illustrated in FIG. 5, the controller 130 controls the charging operation of the two or more power storage devices 110 in step S20.

In step S21, the controller 130 determines whether the voltage detected by the detection unit 131 is equal to or greater than the upper limit voltage (threshold T2), that is, whether the voltage detected by the detection unit 131 reaches the threshold T2. While the voltage does not reach the threshold T2, the controller 130 executes the charging operation. When the voltage reaches the threshold T2, the controller 130 executes the operation of step S22.

In step S22, the controller 130 stops the charging operation of the two or more power storage devices 110.

In step S23, the controller 130 continues the state in which the charging operation is stopped for a certain period of time (standby control).

In step S24, the controller 130 determines whether the voltage detected by the detection unit 131 is equal to or greater than the upper limit voltage (threshold T2), that is, whether the voltage detected by the detection unit 131 falls below the threshold T2 after the standby control over the certain period of time. When the voltage is equal to or greater than the threshold T2, the controller 130 ends the processing sequence. When the voltage falls below the threshold T2, the controller 130 executes the processing of step S25.

In the example illustrated in FIG. 5, it is assumed that the threshold used in the determination in step S24 is the same as the threshold T2 used in the determination in step S21, but the embodiment is not limited thereto. The threshold used in the determination in step S24 may be smaller than the threshold T2 used in the determination of step S21.

In step S25, the controller 130 resumes the charging operation of the two or more power storage devices 110. The controller 130 may resume the charging operation with a current smaller than the current before the charging operation is stopped.

### Actions and Effects

In the embodiment, the controller 130 executes the current decrease control for decreasing the predetermined discharge current or the predetermined charge current when the voltage detected by the detection unit 131 reaches the predetermined voltage. Such a configuration makes it possible to reduce the difference in voltage between the two or more power storage devices 110 when the voltage of the power storage device 110 reaches the predetermined voltage. Furthermore, the entire two or more power storage devices 110 can perform the efficient discharging or charging operation.

### Modification Example 1

Modification Example 1 of the embodiment will be described below. In the following, differences from the embodiment will be mainly described.

In the embodiment, the case is illustrated in which the discharging operation or the charging operation is stopped to reduce the predetermined discharge current or the predetermined charge current. In other words, the case in which the discharging operation or the charging operation is stopped to carry out the current decrease control. In contrast, in Modification Example 1, the current decrease control includes control of decreasing the predetermined discharge current or the predetermined charge current without stopping the discharging operation or charging operation.

In Modification Example 1, the controller 130 executes control for gradually decreasing the predetermined discharge current or predetermined charge current in the current decrease control.

### Current Decrease Control

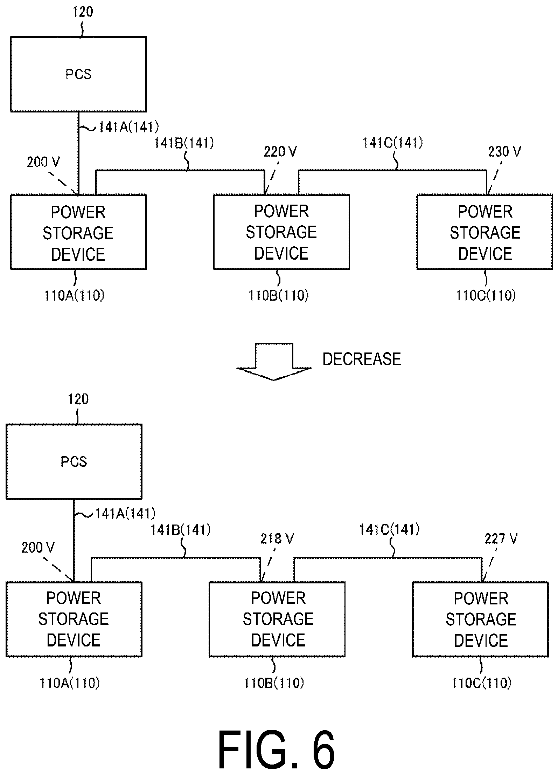

The current decrease control according to Modification Example 1 will be described below. Here, the current decrease control in the discharging operation is illustrated. In FIG. 6, the lower limit voltage is 200 V.

As illustrated in the upper part of FIG. 6, the controller 130 controls the discharging operation of the two or more power storage devices 110. Here, the controller 130 controls the discharging operation such that the predetermined discharge current input to the PCS 120 is a first discharge current (for example, 30A).

Here, a case where the output voltage of the power storage device 110A reaches the lower limit voltage is described. In such a case, the output voltage of the power storage device 110B is dropped due to the impedance of the wire 141B, so, even when the output voltage of the power storage device 110A reaches the lower limit voltage, the output voltage of the power storage device 110B is higher (for example, 220 V) than the output voltage of the power storage device 110A. The output voltage of the power storage device 110C is dropped due to the impedance of the wire 141B and the wire 141C, so, even when the output voltage of the power storage device 110A reaches the lower limit voltage, the output voltage of the power storage device 110C is higher (for example, 230 V) than the output voltage of the power storage device 110A and the power storage device 110B.

As illustrated in the lower part of FIG. 6, the controller 130 decreases the predetermined discharge current without stopping the discharging operation. For example, the controller 130 controls the discharging operation such that the predetermined discharge current input to the PCS 120 is the second discharge current (for example, 27A) smaller than the first discharge current (for example, 30A). In other words, the controller 130 decreases a predetermined rate (10%) of the current relative to the first discharge current from the predetermined discharge current.

According to the current decrease control described above, since the effect of the impedance of the wire 141 on the difference in voltage between the power storage devices 110 can be reduced by gradually decreasing the predetermined discharge current, the current can be taken out from the power storage device 110 with a relatively high voltage. Accordingly, the difference in voltage between the two or more power storage devices 110 can be reduced. Furthermore, the entire two or more power storage devices 110 can perform the efficient discharging operation.

In the example illustrated in FIG. 6, the predetermined discharge current is decreased from the first discharge current to the second discharge current, but Modification Example 1 is not limited thereto. The control of reducing the current at a predetermined rate (10%) of the first discharge current from the predetermined discharge current may be repeated. The decrease of the predetermined discharge current may be repeated until the predetermined discharge current is zero.

### Control Method

A control method according to Modification Example 1 is described below.

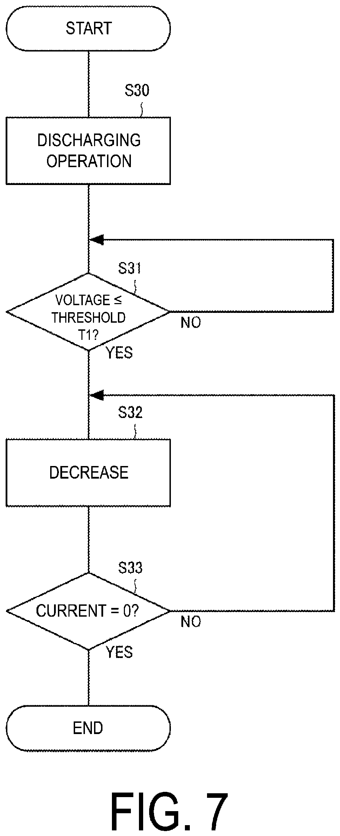

First, the discharging operation is described with reference to FIG. 7.

As illustrated in FIG. 7, in step S30, the controller 130 controls the discharging operation of the two or more power storage devices 110.

In step S31, the controller 130 determines whether the voltage detected by the detection unit 131 is equal to or smaller than the lower limit voltage (threshold T1), that is, whether the voltage detected by the detection unit 131 reaches the threshold T1. While the voltage does not reach the threshold T1, the controller 130 executes the discharging operation. When the voltage reaches the threshold T1, the controller 130 executes the operation of step S32.

In step S32, the controller 130 decreases the predetermined discharge current. For example, the decrease rate of the predetermined discharge current is 10%. When the predetermined discharge current after the decrease is not zero, the controller 130 continues the discharging operation for a certain period of time (for example, ten seconds).

In step S33, the controller 130 determines whether the predetermined discharge current is zero. When the predetermined discharge current is zero, the controller 130 ends the processing sequence. When the predetermined discharge current is not zero, the controller 130 returns to the processing of step S32.

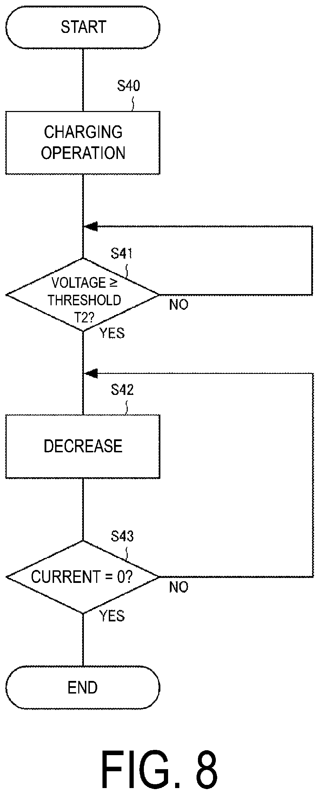

Secondly, the charging operation is described with reference to FIG. 8.

As illustrated in FIG. 8, in step S40, the controller 130 controls the charging operation of the two or more power storage devices 110.

In step S41, the controller 130 determines whether the voltage detected by the detection unit 131 is equal to or greater than the upper limit voltage (threshold T2), that is, whether the voltage detected by the detection unit 131 reaches the threshold T2. While the voltage does not reach the threshold T2, the controller 130 executes the charging operation. When the voltage reaches the threshold T2, the controller 130 executes the operation of step S42.

In step S42, the controller 130 decreases the predetermined charge current. For example, the decrease rate of the predetermined charge current is 10%. When the predetermined charge current after decreasing is not zero, the controller 130 continues the charging operation for a certain period of time (for example, ten seconds).

In step S43, the controller 130 determines whether the predetermined charge current is zero. The controller 130 ends the processing sequence when the predetermined charge current is zero. The controller 130 returns to the processing of step S42 when the predetermined charge current is not zero.

### Actions and Effects

In Modification Example 1, the controller 130 executes the control for gradually decreasing the predetermined discharge current or predetermined charge current in the current decrease control. Such a configuration, as in the embodiment, makes it possible to reduce the difference in voltage between the two or more power storage devices 110 when the discharging operation or charging operation ends. Furthermore, the entire two or more power storage devices 110 can perform the efficient discharging or charging operation.

### Modification Example 2

Modification Example 2 of the embodiment will be described below. In the following, differences from Modification Example 1 will be mainly described.

In Modification Example 1, the controller 130 executes the control for gradually decreasing the predetermined discharge current or the predetermined charge current when the voltage detected by the detection unit 131 reaches the lower limit voltage or the upper limit voltage. In other words, the predetermined voltage is the lower limit voltage or the upper limit voltage. In contrast, in Modification Example 2, the controller 130 executes the control for gradually decreasing the predetermined discharge current when the voltage detected by the detection unit 131 reaches the predetermined voltage greater than the lower limit voltage. The controller 130 executes the control for gradually decreasing the predetermined charge current when the voltage detected by the detection unit 131 reaches a predetermined voltage smaller than the upper limit voltage.

### Current Decrease Control

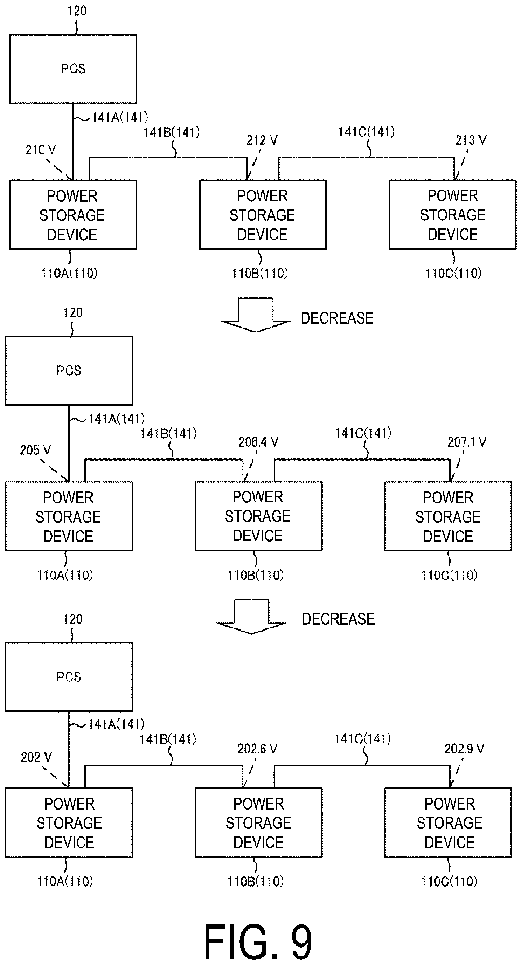

Current decrease control according to Modification Example 2 is described below. Here, the current decrease control in the discharging operation is illustrated. In FIG. 9, the lower limit voltage is 200 V.

As illustrated in the upper part of FIG. 9, the controller 130 controls the discharging operation of the two or more power storage devices 110. Here, the controller 130 controls the discharging operation such that the predetermined discharge current input to the PCS 120 is the first discharge current (for example, 30A).

In the illustrated example, the output voltage of the power storage device 110A reaches a first predetermined voltage (which is 210 V in the upper part of FIG. 9) greater than the lower limit voltage. In such a case, the output voltage of the power storage device 110B is dropped due to the impedance of the wire 141B, so, even when the output voltage of the power storage device 110A reaches the first predetermined voltage, the output voltage of the power storage device 110B is higher (for example, 212 V) than the output voltage of the power storage device 110A. The output voltage of the power storage device 110C is dropped due to the impedance of the wires 141B and 141C, so, even when the output voltage of the power storage device 110A reaches the first predetermined voltage, the output voltage of the power storage device 110C is higher (for example, 213 V) than the output voltage of the power storage device 110A and the power storage device 110B.

As illustrated in the middle part of FIG. 9, the controller 130 decreases the predetermined discharge current without stopping the discharging operation. For example, the controller 130 controls the discharging operation such that the predetermined discharge current input to the PCS 120 is the second discharge current (for example, 20A) smaller than the first discharge current (for example, 30A). In other words, the controller 130 decreases a predetermined rate (33%) of the current relative to the first discharge current from the predetermined discharge current.

Here, in the illustrated example, a case where the output voltage of the power storage device 110A reaches a second predetermined voltage (which is 205 V in the middle part of FIG. 9) greater than the lower limit voltage is described. In such a case, the effect of the impedance of the wire 141 is smaller than that in the upper part of FIG. 9, thus decreasing the difference in voltage of the two or more power storage devices 110. For example, the voltage of the power storage device 110B is 206.4 V, and the voltage of the power storage device 110C is 207.1 V.

As illustrated in the lower part of FIG. 9, the controller 130 further decreases the predetermined discharge current without stopping the discharging operation. For example, the controller 130 controls the discharging operation such that the predetermined discharge current input to the PCS 120 is a third discharge current (for example, 10A) smaller than the second discharge current (for example, 20A). In other words, the controller 130 further decreases a predetermined rate (33%) of the current relative to the first discharge current from the predetermined discharge current.

Here, a case where the output voltage of the power storage device 110A reaches a third predetermined voltage (which is 202 V in the middle part of FIG. 9) greater than the lower limit voltage is described. In such a case, the effect of the impedance of the wiring 141 is even smaller than in the middle row of FIG. 9, so that the difference in voltage of the two or more power storage devices 110 can further be reduced. For example, the voltage of the power storage device 110B is 202.6 V, and the voltage of the power storage device 110C is 202.9 V.

According to the current decrease control described above, the effect of the impedance of the wire 141 on the difference in voltage between the power storage devices 110 can be reduced by gradually decreasing the predetermined discharge current, thus reducing the difference in voltage of the two or more power storage device 110. Furthermore, the entire two or more power storage devices 110 can perform the efficient discharging operation.

In the example illustrated in FIG. 9, the case is illustrated in which the predetermined discharge current is decreased through three steps using three predetermined voltages, but Modification Example 2 is not limited thereto. The predetermined discharge current may be decreased in two steps using two predetermined voltages. The predetermined discharge current may be decreased through four or more steps using four or more predetermined voltages. The smallest predetermined voltage may be the lower limit voltage.

### Control Method

A control method according to Modification Example 2 will be described below.

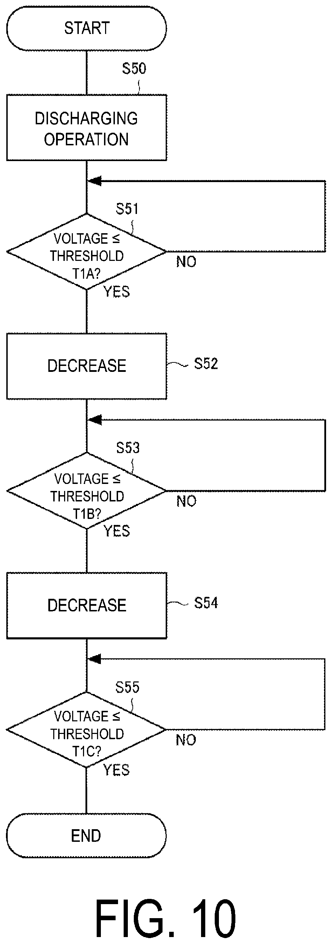

First, the discharging operation is described with reference to FIG. 10.

As illustrated in FIG. 10, the controller 130 controls the discharging operation of the two or more power storage devices 110 in step S50.

In step S51, the controller 130 determines whether the voltage detected by the detection unit 131 is equal to or smaller than the threshold T1A (for example, 210 V as illustrated in the upper part of FIG. 9), that is, whether the voltage detected by the detection unit 131 reaches the threshold T1A. While the voltage does not reach the threshold T1A, the controller 130 executes the discharging operation. When the voltage reaches the threshold T1A, the controller 130 executes the operation of step S52.

In step S52, the controller 130 decreases the predetermined discharge current. For example, the decrease rate of the predetermined discharge current is 33%.

In step S53, the controller 130 determines whether the voltage detected by the detection unit 131 is equal to or smaller than the threshold T1B (< threshold T1A (for example, 205 V illustrated in the middle part of FIG. 9)), that is, whether the voltage detected by the detection unit 131 reaches the threshold T1B. While the voltage does not reach threshold T1B, the controller 130 executes the discharging operation. When the voltage reaches the threshold T1B, the controller 130 executes the operation of step S54.

In step S54, the controller 130 decreases the predetermined discharge current. For example, the decrease rate of the predetermined discharge current is 33%.

In step S55, the controller 130 determines whether the voltage detected by the detection unit 131 is equal to or smaller than threshold T1C (for example, the lower limit voltage (< threshold T1B), that is, whether the voltage detected by the detection unit 131 reaches the threshold T1C. While the voltage does not reach the threshold T1C, the controller 130 executes the discharging operation. When the voltage reaches the threshold T1C, the controller 130 ends the processing sequence.

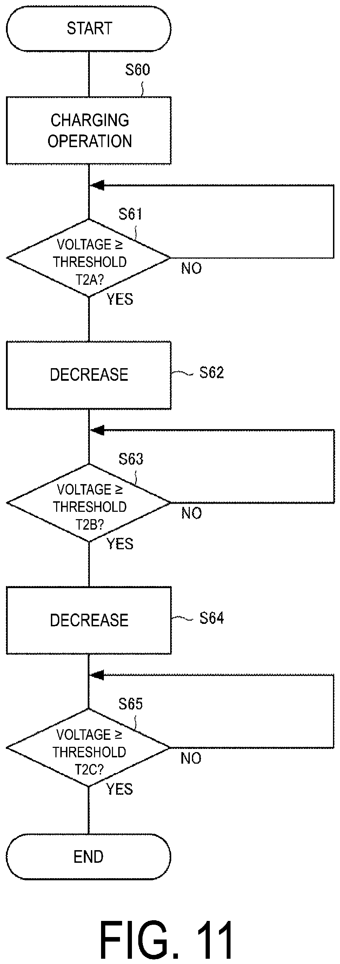

Secondly, the charging operation is described with reference to FIG. 11.

As illustrated in FIG. 11, in step S60, the controller 130 controls the charging operation of the two or more power storage devices 110.

In step S61, the controller 130 determines whether the voltage detected by the detection unit 131 is equal to or greater than the threshold T2A, that is, whether the voltage detected by the detection unit 131 reaches the threshold T2A. While the voltage does not reach the threshold T2A, the controller 130 executes the charging operation. When the voltage reaches the threshold T2A, the controller 130 executes the operation of step S62.

In step S62, the controller 130 decreases the predetermined charge current. For example, the decrease rate of the predetermined charge current is 33%.

In step S63, the controller 130 determines whether the voltage detected by the detection unit 131 is equal to or greater than the threshold T2B (> threshold T2A), that is, whether the voltage detected by the detection unit 131 reaches the threshold T2B. While the voltage does not reach the threshold T2B, the controller 130 executes the charging operation. When the voltage reaches the threshold T2B, the controller 130 executes the operation of step S64.

In step S64, the controller 130 decreases the predetermined charge current. For example, the decrease rate of the predetermined charge current is 33%.

In step S65, the controller 130 determines whether the voltage detected by the detection unit 131 is equal to or greater than the threshold T2C (for example, the upper limit voltage (> threshold T2B)), that is, whether the voltage detected by the detection unit 131 reaches the threshold T2C. While the voltage does not reach the threshold T2C, the controller 130 executes the charging operation. When the voltage reaches the threshold T2C, the controller 130 ends the processing sequence.

### Modification Example 3

Modification Example 3 of the embodiment will be described below. In the following, differences from the embodiment will be mainly described.

In the embodiment described above, the power storage device 110B and the power storage device 110C are not directly connected to the PCS 120. In contrast, in Modification Example 3, the power storage device 110B and the power storage device 110C, as well as the power storage device 110A, may also be directly connected to the PCS 120.

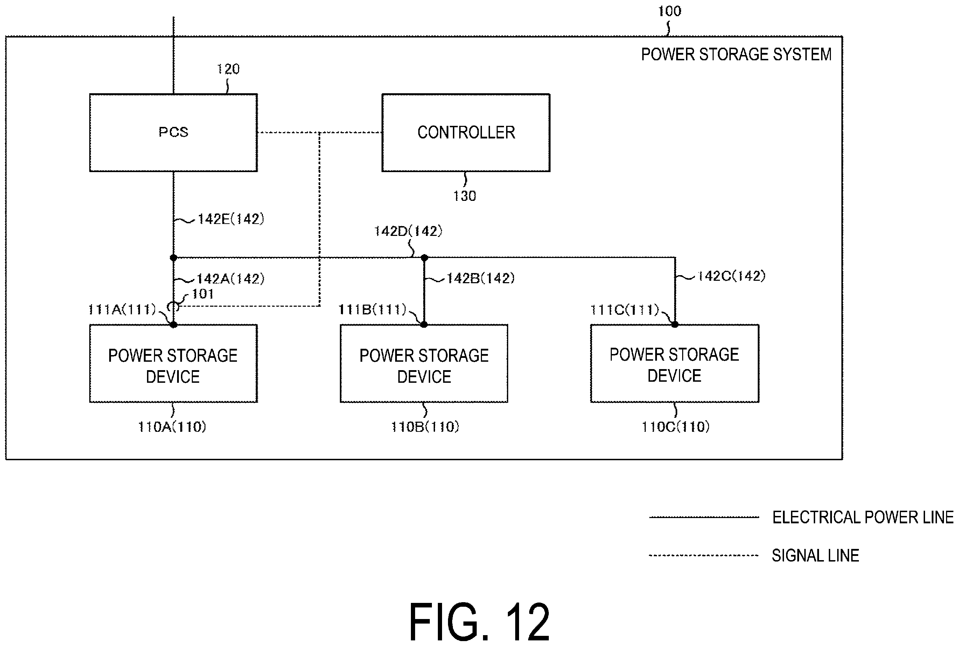

Specifically, as illustrated in FIG. 12, the power storage device 110A is connected to the PCS 120 by wires 142A and 142E. The power storage device 110B is connected to the PCS 120 by wires 142B, 142D, and 142E. The power storage device 110C is connected to the PCS 120 by wires 142C, 142D, and 142E. The power storage devices 110A, 110B, and 110C are connected in parallel by wires 142 to the PCS 120, as in the embodiment.

Here, the lengths of the wires 142 connecting the power storage devices 110 and the PCS 120 are different from each other, as in the embodiment. Specifically, the wire 142 connecting the power storage device 110C and the PCS 120 is longer than the wire 142 connecting the power storage device 110B and the PCS 120, and the wire 142 connecting the power storage device 110B and the PCS 120 is longer than the wire connecting the power storage device 110A and the PCS 120.

In Modification Example 3, the controller 130 detects the voltage of the power storage device 110A having the shortest wire 141 between the two or more power storage devices 110. The sensor 101 may be provided on the wire 142A, or may be provided in the power storage device 110A.

### Other Embodiments

Although the present disclosure has been described by the above embodiment, it is not understood that the description and the drawings, which form a part of this disclosure, limit the disclosure. Various alternative embodiments, examples, and operational techniques will be apparent from this disclosure to those skilled in the art.

Although not particularly mentioned in the embodiment, the lower limit voltage may be a discharge end voltage at which the power storage devices 110 may be discharged. However, the embodiment is not limited thereto. For example, the lower limit voltage may be a voltage that is defined to ensure the power supply for the business continuity planning (BCP).

Although not specifically mentioned in the embodiment, the upper limit voltage may be a charge end voltage at which the power storage devices 110 may be charged. However, the embodiment is not limited thereto. For example, the upper limit voltage may be a voltage that is defined to ensure the charging excess in negawatt transactions or the like.

In the embodiment, the case has been illustrated in which the voltage detected by the detection unit 131 is the voltage of the power storage device 110A having the shortest wire 141 or 142. In other words, the case has been illustrated in which the material and thickness of the wire 141 or 142 are uniform. However, the embodiment is not limited thereto. For example, a case is also conceivable in which the material and thickness of the wire 141 or 142 are partially different. In such a case, the voltage detected by the detection unit 131 may be the voltage of a power storage device 110 with the smallest impedance of the wire 141 or 142. For example, the material and thickness of wires 142A, 142B, 142C, 142D, and 142E may be different from each other in FIG. 12. In such a case, when the impedance of the wire 142 between the power storage device 110B and the PCS 120 is smallest, the sensor 101 may be provided on the wire 142B or in the power storage device 110B.

## Claims

1. A power storage system in which two or more power storage devices are connected in parallel to one power conversion device by wiring, the power storage system comprising:
a detection unit configured to detect voltages of the two or more power storage devices; and
a control unit configured to, when the voltages detected by the detection unit reach a predetermined voltage, execute current decrease control for decreasing a predetermined discharge current input to the power conversion device or a predetermined charge current output from the power conversion device, to reduce a difference in the voltages among the two or more power storage devices.

2. The power storage system according to claim 1, wherein
the detection unit detects a voltage of a power storage device with smallest impedance of the wiring among the two or more power storage devices.

3. The power storage system according to claim 1 or 2, wherein
the predetermined voltage comprises a lower limit voltage used in a discharging operation of the two or more power storage devices, and
when the voltages detected by the detection unit reach the lower limit voltage, the control unit executes the current decrease control for decreasing the predetermined discharge current in the discharging operation of the two or more power storage devices.

4. The power storage system according to claim 1 or 2, wherein
the predetermined voltage comprises an upper limit voltage used in a charging operation of the two or more power storage devices, and
when the voltages detected by the detection unit reach the upper limit voltage, the control unit executes the current decrease control for decreasing the predetermined charge current in the charging operation of the two or more power storage devices.

5. The power storage system according to any one of claims 1 to 4, wherein
the current decrease control comprises control for stopping the discharging operation or the charging operation of the two or more power storage devices.

6. The power storage system according to claim 5, wherein
the control unit resumes the discharging operation with a current smaller than the current used before the discharging operation is stopped, after a certain period of time has elapsed from stopping the discharging operation of the two or more power storage devices, and
resumes the charging operation with a current smaller than the current used before the charging operation is stopped, after a certain period of time has elapsed from stopping the charging operation of the two or more power storage devices.

7. The power storage system according to any one of claims 1 to 4, wherein
the control unit executes control for gradually decreasing the predetermined discharge current or the predetermined charge current in the current decrease control.

8. A control method used in a power storage system in which two or more power storage devices are connected in parallel by wiring to one power conversion device, the method comprising:
step A of detecting voltages of the two or more power storage devices; and
step B of, when the voltages detected in step A reach a predetermined voltage, executing current decrease control for decreasing a predetermined discharge current input to the power conversion device or a predetermined charge current output from the power conversion device, to reduce a difference in the voltages between the two or more power storage devices.
